# EUROPÄISCHE PATENTANMELDUNG

(11) **EP 3 659 776 A1**
(43) Veröffentlichungstag der Anmeldung: **03.06.2020**
(21) Anmeldenummer: 18450011.4
(22) Anmeldetag: 27.11.2018
(51) Int. Cl.: B29C 44/34, B29C 44/12, B29C 44/14

(54) **VERFAHREN ZUM AUFBRINGEN EINER DECKSCHICHT AUF EINEN TRÄGER**

(71) Anmelder: ALBA Tooling & Engineering GmbH, 5552 Forstau (AT)
(72) Erfinder: Seyfried, Markus, A-8972 Ramsau am Dachstein (AT)
(74) Vertreter: Keschmann, Marc

(57) **Zusammenfassung**

Bei einem Verfahren zum Aufbringen einer Deckschicht (11) aus insbesondere thermoplastischem Kunststoff auf eine Sichtseite eines vorgeformten, insbesondere thermoplastischen Trägers (7), bei welchem die Deckschicht (11)unter Verwendung eines Formwerkzeugs (8) und unter Vermittlung einer Schaumschicht aus insbesondere Polyurethan Weichschaum auf den Träger aufgebracht wird, wobei der Träger (7) vor dem Schäumen der Schaumschicht zumindest in Teilbereichen erhitzt wird, wird zumindest ein stark strukturierter Strukturbereich (7') auf der der Sichtseite gegenüber liegenden Strukturseite des Trägers (7) kontaktlos, insbesondere durch Heißluft und/oder Infrarotstrahlung erhitzt.

## Beschreibung

Die Erfindung betrifft ein Verfahren zum Aufbringen einer Deckschicht aus insbesondere thermoplastischem Kunststoff auf eine Sichtseite eines vorgeformten, insbesondere thermoplastischen Trägers, bei welchem die Deckschicht unter Verwendung eines Formwerkzeugs und unter Vermittlung einer Schaumschicht aus insbesondere Polyurethan (PUR) Weichschaum auf den Träger aufgebracht wird, wobei der Träger vor dem Schäumen der Schaumschicht zumindest in Teilbereichen erhitzt wird, sowie eine entsprechende Vorrichtung.

Insbesondere im Automobilbau ist es üblich, zur Herstellung von Verkleidungsteilen vorgeformte Träger aus Spritzguss auf der Sichtseite, die dem Fahrgastraum zugewandt ist, zu beschichten, um eine ansprechende Oberflächengestaltung beispielsweise einer Instrumententafel zu erzielen. Der Träger wird hierbei in ein Werkzeug bzw. eine Vorrichtung mit zumindest einem Stützwerkzeug zur Stützung des Trägers von der Unterseite und mit einem Formwerkzeug zum Aufbringen der Deckschicht und zum Einspritzen des Kunststoffschaums eingelegt und das Werkzeug geschlossen. Auf diese Weise werden insbesondere Armaturenbretter bzw. Instrumententafeln hergestellt, die zur Aufnahme der Instrumente eines Fahrzeugs sowie der Heizungseinheit und zur Aufnahme von Bildschirmen, beispielsweise von Navigations- und Entertainmentsystemen dienen. Während der Spritzgussträger die Form vorgibt und für die mechanische Festigkeit sorgt, verleiht die Deckschicht samt der darunterliegenden Schaumschicht der Armaturentafel die haptischen Eigenschaften und ist für einen guten optischen Eindruck strukturiert. Beispielsweise kann die Deckschicht, die aus irgendeinem geeigneten Kunststoffmaterial hergestellt ist, in der Art von narbigem Leder gestaltet sein. Auf dieselbe Weise können auch andere beschichtete Verkleidungsteile, beispielsweise im Türbereich, hergestellt werden, wo anstelle von Instrumenten beispielsweise Schalter und Knöpfe für Fensterheber und Außenspiegelverstellung sowie Lautsprecher in entsprechenden Ausnehmungen aufgenommen sein können.

Um das Aufbringen der Deckschicht unter Vermittlung des Kunststoffschaums hinsichtlich einer festen und dauerhaften Anhaftung der Deckschicht auf dem Träger zu optimieren, ist es im Stand der Technik bekannt, den Träger vor dem Aufbringen der Deckschicht zu erwärmen bzw. zu erhitzen, um die Haftung der insbesondere PUR Kunststoffe, die den Kunststoffschaum bilden, auf dem Träger zu verbessern und im besten Fall eine stoffliche Verbindung zwischen dem Kunststoffschaum und dem Träger herzustellen. Im Stand der Technik erfolgt das Erhitzen des Trägers durch Kontaktverfahren, wobei Form- und/oder Stützwerkzeuge der entsprechenden Beschichtungsvorrichtungen beheizt sind, um den Träger durch Kontakt zu erhitzen.

Probleme beim Erhitzen gibt es in zunehmendem Maße im Bereich des Beifahrerairbags, der auf der Beifahrerseite einer Instrumententafel unter der beschichteten Sichtseite des Trägers angeordnet ist. Der Träger ist in diesem Bereich zur Ausbildung von Sollbruchstellen geschwächt, um bei Auslösen des Airbags entlang dieser Sollbruchstellen nach Art eines Fensters oder einer Klappe aufzubrechen bzw. aufzureissen und die Ausbreitung des Airbags in den Fahrerraum zu gestatten. Mit immer weiter verbesserten Airbagsystemen ist es notwendig, dass das Aufbrechen der Instrumententafel im Bereich des Airbags in kontrollierter Weise vonstatten geht und die Sollbruchstellen so aufbrechen, dass ein definiertes Fenster bzw. eine definierte Klappe in kontrollierter Weise wegklappt, um den Airbag freizugeben. Hierzu ist auf der der Sichtseite bzw. der Schaumseite des Trägers gegenüberliegenden Strukturseite des Trägers zur Stärkung der Klappe, die beim Auslösen des Airbags kontrolliert aufklappen und nicht selbst zerbrechen oder reißen soll, ein Strukturbereich mit einer starken Strukturierung der Oberfläche zur Ausbildung von Erhebungen in dem genannten Strukturbereich bzw. Klappenbereich ausgebildet, wobei die Oberflächenstrukturen als Erhebungen in Form von Rippen oder ähnlichen Verstärkungselementen ausgebildet sind. Weiters befinden sich im Strukturbereich etwas außerhalb des Bereichs des Fensters bzw. der Klappe stark erhabene und dickwandige Oberflächenstrukturen, die zur Aufnahme von Verankerungsmitteln, wie beispielsweise Schrauben, des Airbagsystems dienen.

Mit steigender Strukturierung im genannten Strukturbereich auf der Strukturseite des Trägers gelangt man einerseits aus Kostengründen und andererseits aus Gründen der mangelnden Entformbarkeit von stark strukturierten Trägern, die auf entsprechend stark strukturierte Form- bzw. Stützwerkzeuge aufgesteckt werden müssten, um den Kontakt für die Erhitzung zu vermitteln, an mit Kontaktheizung nicht sinnvoll überwindbare Grenzen.

Der Erfindung liegt daher die Aufgabe zugrunde, ein Verfahren anzugeben, bei dem auch ein stark strukturierter Strukturbereich zufriedenstellend erhitzt werden kann, um auch beispielsweise im Bereich eines Beifahrerairbags einer Armaturentafel eine möglichst feste und langlebige Verbindung zwischen dem Träger, der haftvermittelnden Schaumschicht und der Deckschicht, die auf den Träger aufgebracht werden soll, zu erzielen.

Zur Lösung dieser Aufgabe ist ein Verfahren der eingangs genannten Art erfindungsgemäß dahingehend weitergebildet, dass zumindest ein stark strukturierter Strukturbereich auf der der Sichtseite gegenüber liegenden Strukturseite des Trägers kontaktlos, insbesondere durch Heißluft und/oder Infrarotstrahlung erhitzt wird. Dies bedeutet, dass hinsichtlich der Erhitzung auf eine starke Strukturierung nicht mehr besonders Rücksicht genommen werden muss, so ausgeprägt sie auch sein muss, damit die beschriebene Festigkeit der Airbagklappe bzw. des Airbagfensters gewährleistet und/oder die robuste Aufnahme der Airbageinheit ermöglicht werden kann. Der bislang problematisch zu beheizende Strukturbereich auf der Strukturseite des Trägers kann somit mit größerer konstruktiver Freiheit konstruiert werden, und es gelingt unabhängig davon eine zuverlässige Erhitzung des Trägers für das hochqualitative Aufbringen der Deckschicht unter Vermittlung von Kunststoffschaum. Das kontaktlose Erhitzen kann gemäß der vorliegenden Erfindung auch im übrigen angrenzenden Bereich oder im Bereich des gesamten Spritzgußträgers durchgeführt werden.

Da die Airbageinheit auf der Beifahrerseite einer Instrumententafel in aller Regel auf der Strukturseite gegenüber der Ebene der Sichtseite des Trägers stark verrippt ist, um eine Schussrichtung des Airbags in Richtung des Beifahrers zu ermöglichen, gestattet es in aller Regel ein Form- bzw. Stützwerkzeug, das im Strukturbereich am Träger anliegt, nicht, dass der Träger ohne eine schädliche Kollision mit dem Werkzeug aus dem Werkzeug entnommen werden kann. Aus diesem Grund ist es gemäß einer bevorzugten Ausführungsform der vorliegenden Erfindung vorgesehen, dass zum Erhitzen des Strukturbereichs ein in einem Stützwerkzeug für den Träger verschiebbares Heizmodul an den Strukturbereich herangefahren wird. Ein Heizmodul zur Verwendung in dem Verfahren gemäß der vorliegenden Erfindung ist somit bevorzugt verschiebbar im Werkzeug angeordnet und kann nach Einschließen des Trägers in das Werkzeug herangefahren und nach dem Schritt des Erhitzens und dem Aufbringen der Deckschicht unter Vermittlung von insbesondere Kunststoffschaum aus dem Strukturbereich herausgefahren werden, sodass in der Folge ein problemloses Entnehmen des Trägers mit der aufgebrachten Deckschicht möglich ist.

Gemäß einer bevorzugten Ausführungsform der vorliegenden Erfindung ist das erfindungsgemäße Verfahren dahingehend weitergebildet, dass die Oberflächentemperatur in dem Strukturbereich bzw. auf der Sichtseite gegenüber dem Strukturbereich mit zumindest einem Wärmesensor und/oder mit zumindest einer Infrarotkamera gemessen und auf Basis der Messung das Erhitzen geregelt wird. Auf diese Weise kann das Erhitzen auch über eine lange Produktionsdauer, in der eine Vielzahl von Trägern entsprechend beschichtet werden und das Werkzeug daher bis zum Erreichen einer Maximaltemperatur heißer wird, genau geregelt we-rden, damit die bevorzugte Temperatur zur optimalen Anhaftung des Kunststoffschaums auf dem Träger durchgehend beibehalten werden kann.

Unter Umständen kann es vorgesehen sein, dass der Strukturbereich in Teilbereichen des Strukturbereichs auf unterschiedlich hohe Temperaturen erhitzt wird, wie dies einer bevorzugten Ausführungsform der vorliegenden Erfindung entspricht. Dies kann notwendig sein, um unterschiedlichen Materialstärken im Strukturbereich zur Erzielung einer gleichmäßigen Temperatur auf der Sichtseite Rechnung zu tragen.

Auf welcher Seite die Oberflächentemperatur des Trägers beispielsweise mit einer Infrarotkamera oder einem Wärmesensor gemessen wird, sei es im Strukturbereich auf der Strukturseite des Trägers oder auf der Sichtseite gegenüber dem Strukturbereich, ist mit fortschreitender Anwendung des erfindungsgemäßen Verfahrens austauschbar, da es das erfindungsgemäße Verfahren gemäß einer bevorzugten Ausführungsform der vorliegenden Erfindung gestattet, dass der Strukturbereich in einem Ausmaß erhitzt wird, dass auf der Sichtseite gegenüber dem Strukturbereich eine Oberflächentemperatur von 35°C bis 70°C, bevorzugt 40°C bis 65°, besonders bevorzugt 45°C bis 60°C erzielt wird, wofür, je nachdem wo die Oberflächentemperatur gemessen wird, entsprechende Algorithmen erstellt werden können.

In dem erfindungsgemäßen Verfahren kann das kontaktlose Erhitzen auf unterschiedlichste Arten durchgeführt werden. Bevorzugt ist das Verfahren jedoch dahingehend weitergebildet, dass die Heißluft durch am oder im Heizmodul angeordnete Heißluftleitungen in den Strukturbereich gefördert wird. Dies bedeutet, dass die Wärme nicht unbedingt im verfahrbaren Teil des Heizmoduls erzeugt werden muss, sondern die Wärme eines wie auch immer gearteten Heizlüfters über entsprechende Leitungen in den Strukturbereich gefördert werden kann.

Um das Erhitzen energetisch effizienter zu gestalten und um beim kontaktlosen Erhitzen mit Heißluft zu verhindern, dass der Spritzgussträger durch große Mengen Heißluft vom Stützwerkzeug abgehoben wird, ist das erfindungsgemäße Verfahren bevorzugt dahingehend weitergebildet, dass die Heißluft durch zumindest eine am oder im Heizmodul angeordnete Abluftleitung aus dem Strukturbereich abgezogen wird. Zum Einen kann auf diese Weise die Restwärme der Heißluft im Sinne einer erneuten Zuführung der Heißluft in den Strukturbereich genutzt werden und zum Anderen verhindert das Abziehen der Heißluft eine übermäßige Erwärmung der Umgebung, was hinsichtlich der Einhaltung von angenehmen Arbeitsbedingungen für das bedienende Personal von großem Vorteil ist. Das Abheben des Spritzgussträgers durch einen Luftpolster großer Mengen Heißluft vom Stützwerkzeug ist unter anderem deshalb nicht wünschenswert, da dies die Wirksamkeit der Kontaktheizung in anderen Bereichen des Trägers kompromittieren würde.

Die Vorrichtung zum Aufbringen einer Deckschicht aus insbesondere thermoplastischem Kunststoff auf eine Sichtseite eines vorgeformten, insbesondere thermoplastischen Trägers unter Vermittlung einer Schaumschicht aus insbesondere Polyurethan (PUR) Weichschaum, umfasst ein ein Formnest bildendes Formwerkzeug und ein Stützwerkzeug zum Stützen des Trägers gegen das Formwerkzeug, wobei das Stützwerkzeug Heizmittel zum Erhitzen des Trägers aufweist. Während dies im Stand der Technik bekannt und üblich ist, ist die Vorrichtung erfindungsgemäß dadurch gekennzeichnet, dass in einem Bereich des Stützwerkzeugs, welches zur Stützung eines stark strukturierten Strukturbereichs auf der der Sichtseite gegenüber liegenden Strukturseite des Trägers ausgebildet ist, ein Heizmodul zum kontaktlosen Erhitzen des Strukturbereichs, insbesondere durch Heißluft und/oder Infrarotstrahlung angeordnet ist. Dies bedeutet, dass das Stützwerkzeug im Strukturbereich nicht an dem Träger anliegen muss, um das Erhitzen über Kontakt zu bewerkstelligen. Es muss hinsichtlich der Erhitzung auf eine starke Strukturierung nicht mehr besonders Rücksicht genommen werden, so ausgeprägt sie auch sein muss, damit die beschriebene Festigkeit der Airbagklappe bzw. des Airbagfensters gewährleistet und/oder die robuste Aufnahme der Airbageinheit ermöglicht werden kann. Der bislang problematisch zu beheizende Strukturbereich auf der Strukturseite des Trägers kann somit mit größerer konstruktiver Freiheit konstruiert werden, und es gelingt unabhängig davon eine zuverlässige Erhitzung des Trägers für das hochqualitative Aufbringen der Deckschicht unter Vermittlung von Kunststoffschaum.

Da die Airbageinheit auf der Beifahrerseite einer Instrumententafel in aller Regel auf der Strukturseite gegenüber der Ebene der Sichtseite des Trägers stark verrippt ist, um eine Schussrichtung des Airbags in Richtung des Beifahrers zu ermöglichen, gestattet es in aller Regel ein Form- bzw. Stützwerkzeug, das im Strukturbereich am Träger anliegt, nicht, dass der Träger ohne eine schädliche Kollision mit dem Werkzeug aus dem Werkzeug entnommen werden kann. Aus diesem Grund ist es gemäß einer bevorzugten Ausführungsform der vorliegenden Erfindung vorgesehen, dass das Heizmodul in dem Stützwerkzeug verschiebbar angeordnet ist. Ein Heizmodul zur Verwendung in dem Verfahren gemäß der vorliegenden Erfindung kann daher Aufstecken des Trägers auf das Stützwerkzeug herangefahren und nach dem Schritt des Erhitzens und dem Aufbringen der Deckschicht unter Vermittlung von insbesondere Kunststoffschaum aus dem Strukturbereich herausgefahren werden, sodass in der Folge ein problemloses Entnehmen des Trägers mit der aufgebrachten Deckschicht möglich ist.

Bevorzugt ist die erfindungsgemäße Vorrichtung dahingehend weitergebildet, dass das Heizmodul Heißluftleitungen mit an der Oberfläche eines zur Stützung des Strukturbereichs des Trägers ausgebildeten Bereichs des Heizmoduls angeordneten Mündungen umfasst. Dies bedeutet, dass die Wärme nicht unbedingt im verfahrbaren Teil des Heizmoduls erzeugt werden muss, sondern die Wärme eines wie auch immer gearteten Heizlüfters über entsprechende Leitungen in den Strukturbereich gefördert werden kann.

Bevorzugt weisen die Mündungen Einsätze mit Einrichtungen zur Ablenkung von Luft auf, wodurch der Luftstrom im Strukturbereich jederzeit eingestellt werden kann, um die bestmögliche Erwärmung des Strukturbereichs zu erzielen. Insbesondere ermöglicht es diese bevorzugte Vorkehrung, ein Heizmodul in Stützwerkzeugen für verschiedenartige zu beschichtende Träger einzusetzen, da die spezifische Heißluftverteilung in einfacher und flexibler Weise eingestellt werden kann.

Um das Erhitzen energetisch effizienter zu gestalten und um beim kontaktlosen Erhitzen mit Heißluft zu verhindern, dass der Spritzgussträger durch große Mengen Heißluft vom Stützwerkzeug abgehoben wird, ist die erfindungsgemäße Vorrichtung bevorzugt dahingehend weitergebildet, dass das Heizmodul zumindest eine Abluftleitung zum Abziehen der Heißluft aus dem Strukturbereich aufweist. Zum Einen kann auf diese Weise die Restwärme der Heißluft im Sinne einer erneuten Zuführung der Heißluft in den Strukturbereich genutzt werden und zum Anderen verhindert das Abziehen der Heißluft eine übermäßige Erwärmung der Umgebung, was hinsichtlich der Einhaltung von angenehmen Arbeitsbedingungen für das bedienende Personal von großem Vorteil ist. Das Abheben des Spritzgussträgers durch einen Luftpolster großer Mengen Heißluft vom Stützwerkzeug ist unter anderem deshalb nicht wünschenswert, da dies die Wirksamkeit der Kontaktheizung in anderen Bereichen des Trägers kompromittieren würde.

Gemäß einer bevorzugten Ausführungsform der vorliegenden Erfindung ist die erfindungsgemäße Vorrichtung dahingehend weitergebildet, dass am Formwerkzeug und/oder am Stützwerkzeug eine Messvorrichtung zum Messen der Oberflächentemperatur in dem Strukturbereich bzw. auf der Sichtseite gegenüber dem Strukturbereich umfassend zumindest einen Wärmesensor und/oder zumindest eine Infrarotkamera angeordnet ist und Daten der Messvorrichtung einer Regelungsvorrichtung zur Regelung des Heizmoduls zugeführt sind. Auf diese Weise kann das Erhitzen auch über eine lange Produktionsdauer, in der eine Vielzahl von Trägern entsprechend beschichtet bzw. beschäumt werden und das Werkzeug daher bis zum Erreichen einer Maximaltemperatur heißer wird, genau geregelt werden, damit die bevorzugte Temperatur zur optimalen Anhaftung des Kunststoffschaums auf dem Träger durchgehend beibehalten werden kann.

Unter Umständen kann es vorgesehen sein, dass der Strukturbereich in Teilbereichen des Strukturbereichs auf unterschiedlich hohe Temperaturen erhitzt wird, um unterschiedlichen Materialstärken im Strukturbereich zur Erzielung einer gleichmäßigen Temperatur auf der Sichtseite zu berücksichtigen. Zu diesem Zweck ist die erfindungsgemäße Vorrichtung bevorzugt dahingehend weitergebildet, dass zumindest zwei unterschiedliche Gruppen von Heißluftleitungen mit zumindest zwei unterschiedlichen Verteilern für Heißluft verbunden sind. Die zumindest zwei unterschiedlichen Gruppen von Heißluftleitungen können auf diese Weise aus den Verteilern mit unterschiedlich heißer Luft versorgt werden, um je nach Notwendigkeit unterschiedlich strukturierte Bereiche des Strukturbereichs unterschiedlich intensiv zu erhitzen.

Unter Umständen kann es vorgesehen sein, dass zumindest zwei unterschiedliche Gruppen von Heißluftleitungen mit zumindest zwei unterschiedlichen Verteilern für Heißluft verbunden sind, wie dies einer bevorzugten Ausführungsform der vorliegenden Erfindung entspricht. Dies kann notwendig sein, um unterschiedlichen Materialstärken im Strukturbereich zur Erzielung einer gleichmäßigen Temperatur auf der Sichtseite Rechnung zu tragen.

Die Erfindung wird nachfolgend anhand eines in der Zeichnung dargestellten Ausführungsbeispiels näher erläutert. In dieser zeigen
Fig. 1 eine perspektivische Darstellung eines Stützwerkzeugs gemäß der erfindungsgemäßen Vorrichtung und zur Verwendung bei dem erfindungsgemäßen Verfahren,
Fig. 2 eine Schnittdarstellung der erfindungsgemäßen Vorrichtung zur Verwendung bei dem erfindungsgemäßen Verfahren,
Fig. 3 eine Detaildarstellung des Heizmoduls im Schnitt gemäß der Fig. 2,
Fig. 4 eine Detailansicht des Bereichs des Formwerkzeugs und des zu beschichtenden Trägers im Bereich des Strukturbereichs des Trägers und
Fig. 5 eine auseinander gezogene Darstellung des Stützwerkzeugs, des Trägers und des Formwerkzeugs

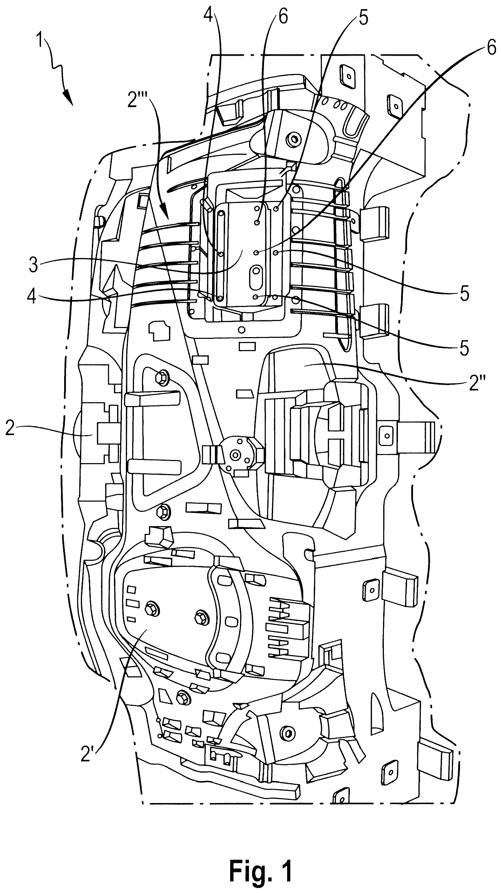

In Fig. 1 ist ein Stützwerkzeug der erfindungsgemäßen Vorrichtung allgemein mit 1 bezeichnet. Das Stützwerkzeug 1 weist eine Stützflache 2 auf, welche in ihrer Formgebung im Wesentlichen der Form der Strukturseite eines in Fig. 1 nicht dargestellten Trägers bzw. Spritzgussträgers entspricht. Die Stützfläche 2 stützt den Träger während des Aufbringens einer Deckschicht. Das in Fig. 1 gezeigte Stützwerkzeug 2 ist zur Herstellung eines Armaturenbretts ausgeformt. Mit 2' ist jener Bereich bezeichnet, auf dem der Cockpitbereich des Trägers zu liegen kommt. Der Bereich 2" ist zur Stützung der Navigations- und Entertainmenteinheit des Armaturenbretts geformt und der Bereich 2"' stützt den Bereich des Beifahrerairbags. Im in den Figuren gezeigten Beispiel kommt daher im Bereich 2"' der Strukturbereich der Strukturseite des Trägers zu liegen, der aufgrund einer starken Strukturierung kaum über eine Kontaktheizung erhitzt werden kann, um eine zufriedenstellende Haftung einer Kunststoffschaumschicht zu erreichen. Aus diesem Grund ist ein Heizmodul 3 im Bereich 2"' angeordnet, mit welchem der Strukturbereich der Strukturseite des Trägers kontaktlos und im vorliegenden Fall insbesondere mit Heißluft erhitzt werden kann. Das Heizmodul 3 weist eine Mehrzahl von Mündungen 4 und 5 von Heißluftleitungen auf, über die Heißluft ausströmen kann. Mit 6 sind Einlassöffnungen einer Luftabsaugung bezeichnet.

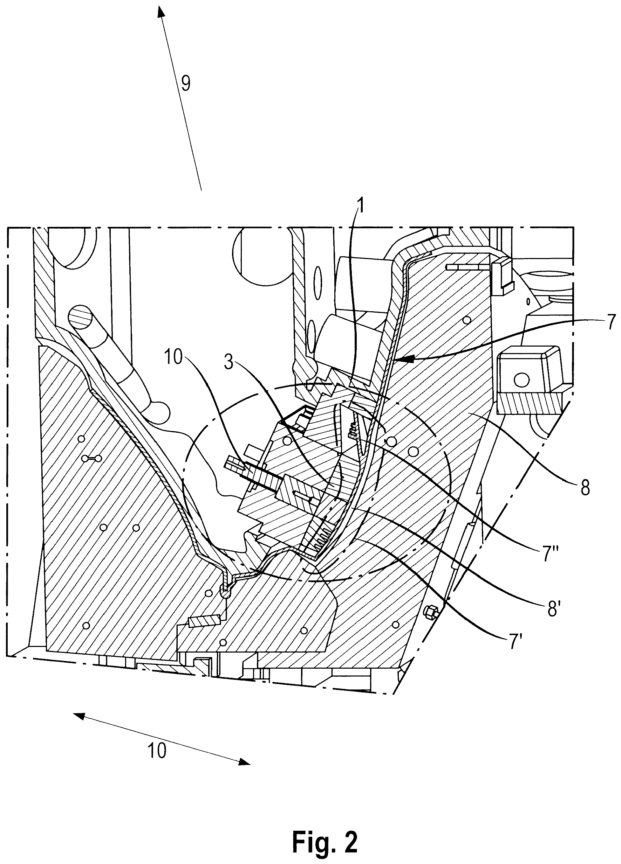

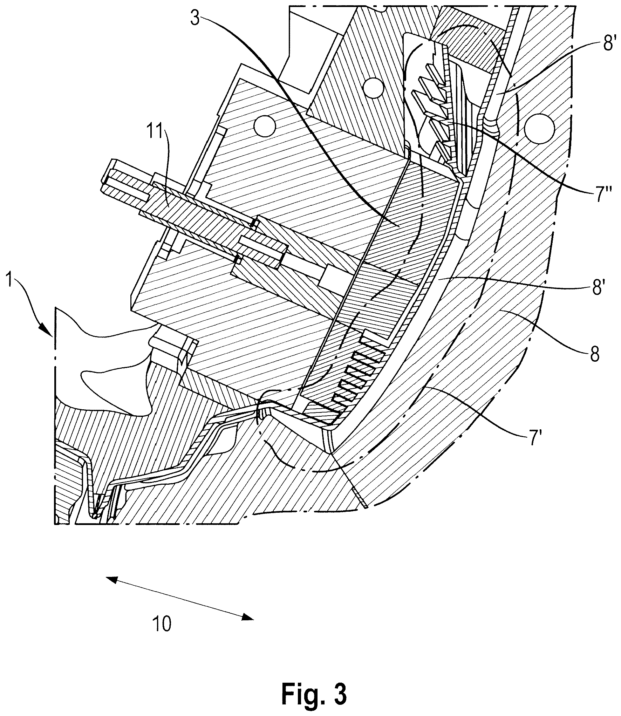

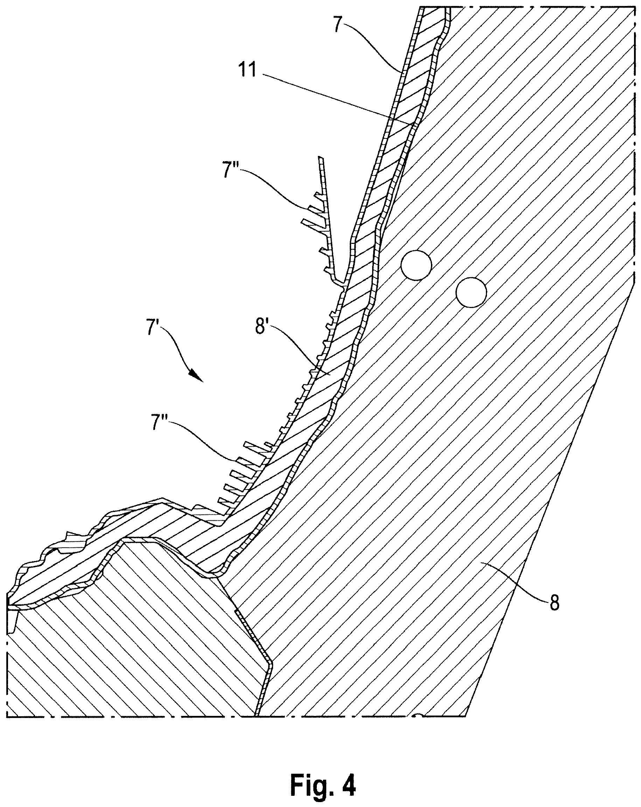

In Fig. 2 sind gleiche Teile mit gleichen Bezugszeichen bezeichnet und es ist zu erkennen, dass ein Träger 7 zwischen dem Unterwerkzeug bzw. Stützwerkzeug 1 und einem Oberwerkzeug bzw. Formwerkzeug 8 eingeschlossen ist. In das Formwerkzeug 8 ist eine Deckschicht eingelegt, wobei zwischen der Deckschicht und dem Träger 7 ein Formnest 8' ausgebildet ist, welches in den Figuren 3 und 4 deutlicher zu erkennen ist und in welches Kunststoffschaum eingespritzt oder eingegossen werden kann, um die Deckschicht unter Vermittlung der Schaumschicht auf den Träger 7 aufzubringen. Der Strukturbereich, in welchem eine Vielzahl verschiedener Strukturelemente 7" zur Verstärkung des Trägers 7 angeordnet sind, ist mit 7' bezeichnet. Die Strukturelemente 7" stehen einer Ein- und Entformung des Trägers 7 in Richtung des Pfeils 9 entgegen, sodass es bei dieser Ausführungsform der vorliegenden Erfindung nötig ist, das Heizmodul 3 im Sinne des Doppelpfeils 10 verschiebbar im Stützwerkzeug 1 anzuordnen.

In Fig. 3 ist zu erkennen, dass das Formwerkzeug 8 ein Formnest 8' zur Aufnahme und Formung von eingespritztem oder eingegossenem Kunststoffschaum bildet. Das Heizmodul 3 ist im Sinne des Doppelpfeils 10 verschiebbar im Stützwerkzeug 1 angeordnet und kann mit Hilfe eines Pneumatik- oder Hydraulikzylinders 11 in diesen Richtungen verfahren werden, um das Einformen und Entformen des Trägers 7 trotz der anderenfalls kollidierenden Strukturelemente 7" zu ermöglichen.

Die bereits genannten Strukturelemente 7" sind in Fig. 4 besser zu erkennen und es ist weiters ersichtlich, dass zwischen dem Träger 7 und dem Formwerkzeug 8 ein Formnest 8' ausgebildet ist, in welches Kunststoffschaum eingegossen werden kann, um eine Deckschicht 11 auf den Träger 7 aufzubringen.

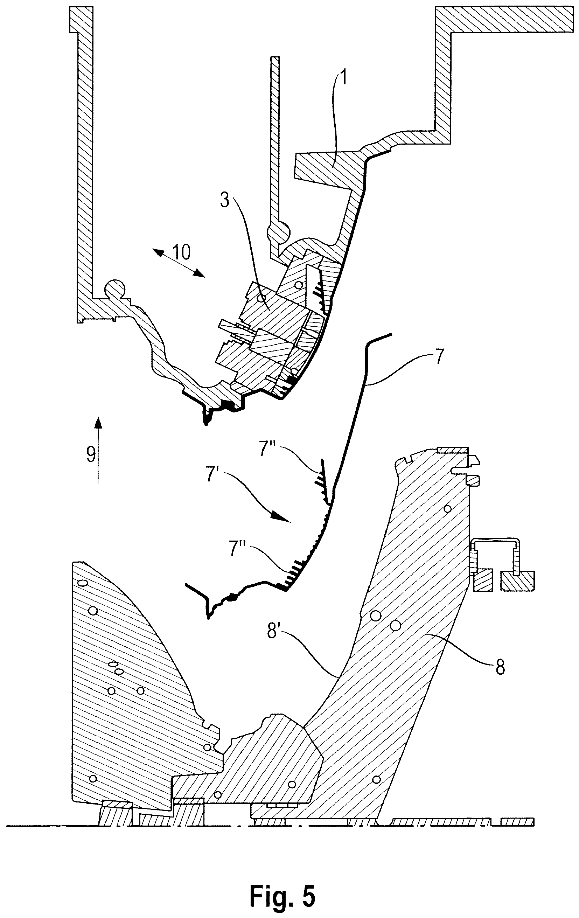

In Fig. 5 ist zu erkennen, dass die oberen Strukturelemente 7" einer Entformung in Richtung des Pfeils 9 entgegenstehen würden, wenn das Heizmodul 3 nicht im Sinne des Doppelpfeils 10 verfahrbar bzw. verschiebbar wäre.

## Patentansprüche

1. Verfahren zum Aufbringen einer Deckschicht aus insbesondere thermoplastischem Kunststoff auf eine Sichtseite eines vorgeformten, insbesondere thermoplastischen Trägers, bei welchem die Deckschicht unter Verwendung eines Formwerkzeugs und unter Vermittlung einer Schaumschicht aus insbesondere Polyurethan Weichschaum auf den Träger aufgebracht wird, wobei der Träger vor dem Schäumen der Schaumschicht zumindest in Teilbereichen erhitzt wird, **dadurch gekennzeichnet, dass** zumindest ein stark strukturierter Strukturbereich (7') auf der der Sichtseite gegenüber liegenden Strukturseite des Trägers (7) kontaktlos, insbesondere durch Heißluft und/oder Infrarotstrahlung erhitzt wird.

2. Verfahren nach Anspruch 1, **dadurch gekennzeichnet, dass** zum Erhitzen des Strukturbereichs (7') ein in einem Stützwerkzeug (1) für den Träger verschiebbares Heizmodul (3) an den Strukturbereich (7') herangefahren wird.

3. Verfahren nach einem der Ansprüche 1 oder 2, **dadurch gekennzeichnet, dass** die Oberflächentemperatur in dem Strukturbereich (7') bzw. auf der Sichtseite gegenüber dem Strukturbereich (7') mit zumindest einem Wärmesensor und/oder mit zumindest einer Infrarotkamera gemessen und auf Basis der Messung das Erhitzen geregelt wird.

4. Verfahren nach einem der Ansprüche 1, 2 oder 3, **dadurch gekennzeichnet, dass** der Strukturbereich (7') in Teilbereichen des Strukturbereichs (7') auf unterschiedlich hohe Temperaturen erhitzt wird.

5. Verfahren nach einem der Ansprüche 1 bis 4, **dadurch gekennzeichnet, dass** der Strukturbereich (7') in einem Ausmaß erhitzt wird, dass auf der Sichtseite gegenüber dem Strukturbereich (7') eine Oberflächentemperatur von 35°C bis 70°C, bevorzugt 40°C bis 65°, besonders bevorzugt 45°C bis 60°C erzielt wird.

6. Verfahren nach einem der Ansprüche 2 bis 5, **dadurch gekennzeichnet, dass** die Heißluft durch am oder im Heizmodul (3) angeordnete Heißluftleitungen in den Strukturbereich (7') gefördert wird.

7. Verfahren nach einem der Ansprüche 2 bis 6, **dadurch gekennzeichnet, dass** die Heißluft durch zumindest eine am oder im Heizmodul (3) angeordnete Abluftleitung (6) aus dem Strukturbereich (7') abgezogen wird.

8. Vorrichtung zum Aufbringen einer Deckschicht aus insbesondere thermoplastischem Kunststoff auf eine Sichtseite eines vorgeformten, insbesondere thermoplastischen Trägers unter Vermittlung einer Schaumschicht aus insbesondere Polyurethan Weichschaum, die Vorrichtung umfassend ein ein Formnest bildendes Formwerkzeug (8) und ein Stützwerkzeug (1) zum Stützen des Trägers (7) gegen das Formwerkzeug (8), wobei das Stützwerkzeug (2) Heizmittel zum Erhitzen des Trägers (7) aufweist, **dadurch gekennzeichnet, dass** in einem Bereich des Stützwerkzeugs (1), welches zur Stützung eines stark strukturierten Strukturbereichs (7') auf der der Sichtseite gegenüber liegenden Strukturseite des Trägers (7) ausgebildet ist, ein Heizmodul (3) zum kontaktlosen Erhitzen des Strukturbereichs (7'), insbesondere durch Heißluft und/oder Infrarotstrahlung angeordnet ist.

9. Vorrichtung nach Anspruch 8, **dadurch gekennzeichnet, dass** das Heizmodul (3) in dem Stützwerkzeug (1) verschiebbar angeordnet ist.

10. Vorrichtung nach Anspruch 8 oder 9, **dadurch gekennzeichnet, dass** das Heizmodul (3) Heißluftleitungen mit an der Oberfläche eines zur Stützung des Strukturbereichs (7') des Trägers (7) ausgebildeten Bereichs des Heizmoduls (3) angeordneten Mündungen (4, 5) umfasst.

11. Vorrichtung nach Anspruch 10, **dadurch gekennzeichnet, dass** die Mündungen (4, 5) Einsätze mit Einrichtungen zur Ablenkung von Luft aufweisen.

12. Vorrichtung nach einem der Ansprüche 8 bis 11, **dadurch gekennzeichnet, dass** das Heizmodul zumindest eine Abluftleitung (6) zum Abziehen der Heißluft aus dem Strukturbereich (7') aufweist.

13. Vorrichtung nach einem der Ansprüche 8 bis 12, **dadurch gekennzeichnet, dass** am Formwerkzeug (8) und/oder am Stützwerkzeug (1) eine Messvorrichtung zum Messen der Oberflächentemperatur in dem Strukturbereich (7') bzw. auf der Sichtseite gegenüber dem Strukturbereich (7') umfassend zumindest einen Wärmesensor und/oder zumindest eine Infrarotkamera angeordnet ist und Daten der Messvorrichtung einer Regelungsvorrichtung zur Regelung des Heizmoduls (3) zugeführt sind.

14. Vorrichtung nach einem der Ansprüche 10 bis 13, **dadurch gekennzeichnet, dass** zumindest zwei unterschiedliche Gruppen von Heißluftleitungen mit zumindest zwei unterschiedlichen Verteilern für Heißluft verbunden sind.
